# EUROPÄISCHE PATENTSCHRIFT

(11) **EP 1 339 770 B1**
(45) Veröffentlichungstag und Bekanntmachung des Hinweises auf die Patenterteilung: **20.01.2010**
(21) Anmeldenummer: 01989441.9
(22) Anmeldetag: 07.11.2001
(51) Int. Cl.: C08G 18/18, C08G 18/28, C08G 18/40, C08G 18/48, C08G 18/50

(54) **AKTIVATOREN FÜR DIE HERSTELLUNG VON POLYURETHANSCHAUMSTOFFEN**
ACTIVATORS FOR THE PRODUCTION OF POLYURETHANE FOAMED MATERIALS
ACTIVATEURS POUR LA PRODUCTION DE MOUSSES DE POLYURETHANNE

(30) Priorität: 14.11.2000 DE 10056309
(43) Veröffentlichungstag der Anmeldung: 03.09.2003
(73) Patentinhaber: Bayer MaterialScience AG, 51368 Leverkusen (DE)
(72) Erfinder: HAAS, Peter, 42781 Haan (DE); WEGENER, Dirk, 40789 Monheim (DE); GRAMMES, Hartwig, 51375 Leverkusen (DE)
(86) Internationale Anmeldenummer: PCT/EP2001/012854
(87) Internationale Veröffentlichungsnummer: WO 2002/040568

(56) Entgegenhaltungen:
- DE-A- 19 512 479
- DE-A- 19 531 955
- US-A- 4 169 921

## Beschreibung

Die Erfindung betrifft bei Raumtemperatur flüssige Aktivatoren mit verringerter Flüchtigkeit, die die Herstellung von Polyurethanschaumstoffen mit verbessertem Emissionsverhalten ermöglichen.

Bei der Herstellung von zelligen oder kompakten Polyurethanen werden hauptsächlich metallorganische Verbindungen und tertiäre Amine als Katalysatoren verwendet. Ein Nachteil der tertiären Amine ist ihre Flüchtigkeit. Es sind verschiedene Ansätze vorgeschlagen worden, die Flüchtigkeit der tertiären Amine zu verringern. Bei Einsatz höhermolekularer Verbindungen wird die geringere Flüchtigkeit erkauft durch eine geringere Aktivität, die durch Zugabe einer erhöhten Menge Katalysator kompensiert werden muss.

EP-A 176 013 lehrt den Einsatz von Aminoalkylhamstoffen als Aktivatoren. Diese Verbindungen zeigen bereits verringerte Flüchtigkeit und verursachen weniger Kontaktverfärbungen der an die Polyurethane angrenzenden Abdeck- und Verkleidungsmaterialien, ihre Herstellung erfordert jedoch lange Reaktionszeiten und ihr Emissionsverhalten genügt noch nicht den gesteigerten Anforderungen der Automobilindustrie. Aus der DE -A-195 12 479 sind thermoaktivierbare Katalysatoren, erhältlich durch Umsetzung von tertiären Aminen, Hydroxyl- und/oder primäre und/oder sekundäre Aminogruppen enthaltend, Polyetherpolyolen und Polyisocyanaten bekannt. Diese Katalysatoren werden zur Herstellung von geschäumten Polyurethanen eingesetzt, sind zu Beginn der Reaktion heterogen und lösen sich mit fortschreitender Reaktion auf und werden voll wirksam.

In DE-OS 30 27 796 werden Dialkylaminoalkylharnstoffe als Aktivatoren zur Herstellung von Polyurethanschaumstoffen beschrieben. Diese Produkte werden durch Umsetzung von sekundären Aminen mit Diisocyanaten in organischen Lösemitteln hergestellt und fallen nach dem Einengen als hochviskose bis kristalline Produkte an. Sie müssen anschließend in die für eine Herstellung von Polyurethanen geeignete Form gebracht werden, da sie als Reinprodukt schlecht zu verarbeiten sind. Dies ist umständlich und teuer.

Es wurde nun gefunden, dass bestimmte Harnstoffderivate/Urethanderivate, die durch Umsetzung spezieller Amine mit höherfunktionellen Polyisocyanaten und isocyanatreaktiven Verbindungen erhalten werden können, ausgezeichnete Löslichkeitseigenschaften besitzen, geringe Flüchtigkeit und hohe Aktivität zeigen. Sie verursachen auch unter thermischer Belastung äußerst geringe Emissionen und schädigen an das Polyurethan angrenzende andere Werkstoffe nicht. Dies ist wichtig im Zusammenhang mit der Foggingproblematik, d.h. Emissionen im Fahrzeuginnenraum, insbesondere unter thermischer Belastung, die angrenzende Werkstoffe beeinträchtigen können und in der Luft im Fahrzeuginnenraum nachweisbar sind.

Gegenstand der vorliegenden Erfindung ist ein Verfahren zur Herstellung von Polyurethanschaumstoffen, bei dem als Aktivatoren Umsetzungsprodukte von
A) einem mindestens eine tertiäre Aminogruppe aufweisenden sekundären Amin oder primären Alkohol,
B) einem Polyisocyanat der Diphenylmethanreihe mit einer Funktionalität von 2,5 bis 4,0, bevorzugt 2,5 bis 3,5, und
C) einer zur Addition an Isocyanat befähigten OH-funktionellen Reaktivkomponente, bevorzugt mit einem zahlenmittleren Molekulargewicht von 62 bis 750
eingesetzt werden.

Bevorzugt erfolgt die Umsetzung bei einem stöchiometrischen Verhältnis zwischen Isocyanat B) und dem mindestens eine tertiäre Aminogruppe aufweisenden sekundären Amin oder primären Alkohol A), d.h. pro NCO-Gruppe des Isocyanats B) liegt im Reaktionsgemisch eine Amino- bzw. Hydroxylgruppe des mindestens eine tertiäre Aminogruppe aufweisenden sekundären Amins oder primären Alkohols A) vor. Bevorzugt wird die Umsetzung so durchgerührt, dass die Solvenskomponente C) und Komponente A) vorgelegt werden und das Isocyanat B) bei einer Temperatur von 20 bis 50°C zugegeben wird. Nach vollständiger Zugabe des Isocyanats B) wird so lange nachreagiert, bis keine freien NCO-Gruppen mehr im Reaktionsgemisch vorhanden sind. Die Nachreaktion erfolgt in der Regel bei Temperaturen von 20 bis 100°C, bevorzugt wird bei 40 bis 60°C gearbeitet, besonders bevorzugt bei etwa 50°C, da bei diesen Temperaturen das Solvens C) nur wenig mit dem Isocyanat B) reagiert.

Erfindungsgemäße Polyurethanschaumstoffe werden im allgemeinen hergestellt durch Umsetzung von
a) Polyisocyanaten oder Polyisocyanatprepolymeren,
b) mindestens einer gegenüber Isocyanatgruppen reaktiven Komponente mit einer Funktionalität von 2 bis 6 und einem zahlenmittleren Molekulargewicht von 1.000 bis 15.000,
c) gegebenenfalls Kettenverlängerern mit einem Molekulargewicht von 62 bis 999,
d) erfindungsgemäßen Aktivatoren,
e) Wasser,
f) gegebenenfalls flüssigem CO₂ oder organische Treibmittel,
g) gegebenenfalls Stabilisatoren,
h) gegebenenfalls weiteren Zusatzstoffen.

In einer bevorzugten Ausführungsform werden die Polyurethane mit einem anderen Werkstoff verbunden oder konfektioniert, z.B. mit einer Folie kaschiert oder durch Hinterschäumen oder Hinterspritzen einer Folie hergestellt.

Vorzugsweise werden als andere Werkstoffe TPO, PVC, ABS, Mischungen aus PVC, ABS, Polyvinylacetat, Polyvinylbutyral, ferner Homo- oder Copolymerisate auf der Basis von Vinylchlorid, Styrol, Butadien, Isopren, Chloropren, Dichlorbutadien, Ethylen, Propen oder Acrylnitril in Form von Folien, Überzügen und Umrandungen mit unterschiedlichen Farbtönen, weiter Lacke auf der Basis von Celluloseestern, Polyesterharzen, Epoxidharzen, Alkydharzen sowie Öllacke oder Kombinationslacke dieser Komponenten, Textilien auf der Basis von Baumwolle oder Leder verwendet. In emer bevorzugten Ausführungsform werden als andere Werkstoffe Polyolefine eingesetzt.

Als Komponente a) werden im erfindungsgemäßen Verfahren organische Di- oder Polyisocyanate oder Polyisocyanatprepolymere verwendet. Als Di- oder Polyisocyanate kommen aliphatische, cycloaliphatische, araliphatische, aromatische und heterocyclische Polyisocyanate in Frage, wie sie in Justus Liebigs Annalen der Chemie 562 (1949) 75 beschrieben werden, beispielsweise solche der Formel

Q(NCO)ₙ

in der
- n: eine ganze Zahl von 2 bis 4, vorzugsweise 2, und
- Q: einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen araliphatischen Kohlenwasserstoffrest mit 8 bis 15, vorzugsweise 8 bis 13 C-Atomen bedeuten.

Bevorzugt sind Polyisocyanate, wie sie in der DE-OS 28 32 253 beschrieben werden. Besonders bevorzugt eingesetzt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'-und/oder 2,4'-Diphenylmethandiisocyanat ableiten. Verwendet werden können auch Prepolymere aus den genannten Isocyanaten und organischen Verbindungen mit mindestens einer Hydroxylgruppe. Beispielhaft genannt seien ein bis vier Hydroxylgruppen aufweisende Polyol- oder Polyester mit (zahlenmittleren) Molekulargewichten von 60 bis 1400. Ganz besonders bevorzugt finden die unter dem Namen "polymeres Diphenylmethandiisocyanat" technisch erhältlichen Polyisocyanate mit einer höheren Funktionalität als 2,0, deren Gemische mit Diphenylmethandiisocyanat oder ternäre Gemische von polymerem Diphenylmethandiisocyanat, Diphenylmethandiisocyanat und Toluylendiisocyanat sowie aus den genannten Isocyanaten hergestellte Prepolymere Verwendung.

Erfindungsgemäß enthält die Polyolkomponente b) mindestens gegenüber Isocyanatgruppen reaktiven Komponente mit einer Funktionalität von 2 bis 6 und einem zahlenmittleren Molekulargewicht von 1.000 bis 15.000. Dies können beispielsweise Polyetherpolyole wie Poly(oxyalkylen)polyole oder Polyesterpolyole oder Kombinationen daraus sein.

Erfindungsgemäß einsetzbare Poly(oxyalkylen)polyole können z.B. durch Polyaddition von Alkylenoxiden an polyfunktionelle Starterverbindungen in Gegenwart von basischen Katalysatoren hergestellt werden. Bevorzugte Starterverbindungen sind Moleküle mit zwei bis sechs Hydroxylgruppen pro Molekül wie Wasser, Triethanolamin, 1,2-Ethandiol, 1,2-Propandiol, 1,3-Propandiol, Diethylenglykol, Dipropylenglykol, Triethylenglykol, Tripropylenglykol, 1,2-Butandiol, 1,3-Butandiol, 1,4-Butandiol, 1,2-Hexandiol, 1,3-Hexandiol, 1,4-Hexandiol, 1,5-Hexandiol, 1,6-Hexandiol, Glycerol, Trimethylolpropan, Pentaerythrit, oder Sorbit. Weitere mögliche Starterverbindungen sind Ammoniak oder Verbindungen, die mindestens eine primäre oder sekundäre Aminogruppe aufweisen, wie beispielsweise aliphatische Amine wie 1,2-Diaminoethan, Oligomere des 1,2-Diaminoethans (beispielsweise Diethylentriamin, Triethylentetramin oder Pentaethylenhexamin), Ethanolamin oder Diethanolamin. 1,3-Diaminopropan, 1,3-Diaminobutan, 1,4-Diaminobutan, 1,2-Diaminohexan, 1,3-Diaminohexan, 1,4-Diaminohexan, 1,5-Diaminohexan, 1,6-Diaminohexan, aromatische Amine wie 1,2-Diaminobenzol, 1,3-Diaminobenzol, 1,4-Diaminobenzol, 2,3-Diaminotoluol, 2,4-Diaminotoluol, 3,4-Diaminotoluol, 2,5-Diaminotoluol, 2,6-Diaminotoluol, 2,2'-Diaminodiphenylmethan, 2,4'-Diaminodiphenylmethan, 4,4'-Diaminodiphenylmethan oder aromatische Amine, die durch säurekatalysierte Kondensierung von Anilin mit Formaldehyd erhalten werden. Die Starterverbindungen können allein oder im Gemisch verwendet werden.

Bevorzugt zur Herstellung der Poly(oxyalkylen)polyole verwendete Alkylenoxide sind Oxiran, Methyloxiran und Ethyloxiran. Diese können allein oder im Gemisch verwendet werden. Bei Verwendung im Gemisch ist es möglich, die Alkylenoxide statistisch oder blockweise oder beides nacheinander umzusetzen. Näheres ist "Ullmanns Encyclopädie der industriellen Chemie", Band A21, 1992, S. 670 f. zu entnehmen.

Geeignete Poly(oxalkylen)polyole können auch eine Dispersion eines gepfropften Polymerisationsprodukts in einem Poly(oxalkylen)polyol sein. Dieses Polymerisationsprodukt kann z.B. durch radikalische in-situ-Polymerisation von Acrylnitril und/oder Styrol in einem Poly(oxyalkylen)polyol hergestellt werden, z.B. nach der Methode der US-PS 3 523 093. Andere Polymerisationsprodukte sind z.B. Polyharnstoffverbindungen, Polyhydrazide oder tertiäre Aminogruppen enthaltende Polyurethane. Geeignete Methoden zur Herstellung von Dispersionen dieser Polymerisationsprodukte sind beispielsweise beschrieben in EP-A 11 752, US-PS 4 374 209 und DE-OS 32 31 497. Vorzugsweise beträgt der Anteil der Polymerisationsprodukte in der Dispersion 1 bis 50 Gew-%.

Es können in der Polyolkomponente b) auch ein oder mehrere Polyesterpolyole mit (zahlenmittleren) Molmassen von 1.000 bis 30.000 g/mol, bevorzugt 1.000 bis 10.000 g/mol, besonders bevorzugt 2.000 bis 6000 g/mol aus aromatischen und/oder aliphatischen Dicarbonsäuren und mindestens zwei Hydroxylgruppen aufweisenden Polyolen eingesetzt werden. Beispiele für Dicarbonsäuren sind Phthalsäure, Isophthalsäure, Terephthalsäure, Fumarsäure, Maleinsäure, Azelainsäure, Glutarsäure, Adipinsäure, Korksäure, Sebacinsäure, Malonsäure und Bernsteinsäure. Es können die reinen Dicarbonsäuren sowie beliebige Mischungen daraus verwendet werden. Anstelle der freien Dicarbonsäuren können auch die entsprechenden Dicarbonsäurederivate, wie z. B. Dicarbonsäuremono- oder -diester von Alkoholen mit ein bis vier Kohlenstoffatomen eingesetzt werden. Solche Ester entstehen beispielsweise bei der Recyclisierung von Polyesterabfällen. Es können als Säurekomponente auch Dicarbonsäureanhydride wie Phthalsäureanhydrid oder Maleinsäureanhydrid eingesetzt werden. Als Alkoholkomponente zur Veresterung werden vorzugsweise verwendet: Ethylenglykol, Diethylenglykol, Tetraethylenglykol, 1,2-Propandiol, 1,3-Propandiol, 1,4-Butandiol, 1,5-Pentandiol, 1,6-Hexandiol, 1,10-Decandiol, Glycerin, Trimethylolpropan, Pentaerythrit bzw. Mischungen daraus. Es können auch Polyesterpolyole aus Lactonen, z.B. ε-Caprolacton oder Hydroxycarbonsäuren, z.B. ω-Hydroxycarbonsäuren, verwendet werden.

Die Polyolkomponente b) kann auch Polyetheresterpolyole enthalten, wie sie z.B. durch Reaktion von Phthalsäureanhydrid mit Diethylenglykol und nachfolgende Umsetzung mit Oxiran erhältlich sind.

Weitere Beispiele geeigneter Polyole, die in der Polyolkomponente b) enthalten sein können, sind polyfunktionelle Alkohole oder Amine oder Aminoalkohole oder Mischungen aus diesen sowie deren oxypropylierte und/oder oxyethylierte Folgeprodukte oder auch Polyesterpolyole, die durch Veresterung mehrfach funktioneller Alkohole mit mehrfach funktionellen Carbonsäuren erhalten werden. Die Polyolkomponente b) weist bevorzugt einen Gehalt an primären Hydroxylgruppen von mindestens 75% auf.

Als Komponente c) werden gegebenenfalls Kettenverlängerer bzw. Vernetzer mit einem Molekulargewicht von 62 bis 999 g/mol eingesetzt, z.B. Glycerin, Glykole, Sorbit, Alkanolamine oder deren Alkoxylierungsprodukte. Es können sowohl aromatische wie aliphatische Verlängerer eingesetzt werden. Neben hydroxyfunktionellen können auch aminofunktionelle Kettenverlängerer bzw. Vernetzer Verwendung finden.

Erfindungsgemäß werden als Aktivatoren d) Umsetzungsprodukte von
A) einem mindestens eine tertiäre Aminogruppe aufweisenden sekundären Amin oder primären Alkohol,
B) einem Polyisocyanat der Diphenylmethanreihe mit einer Funktionalität von 2,5 bis 4,0, bevorzugt 2,5 bis 3,5 und
C) einer zur Addition an Isocyanat befähigten OH-funktionellen Reaktivkomponente als Solvens
eingesetzt.

Als Komponente A) werden bevorzugt Bis(dialkylaminoalkyl)amine oder N-Hydroxyalkylbis(tert.-aminoalkyl)ether verwendet. Insbesondere bevorzugt sind Verbindungen der allgemeinen Formel 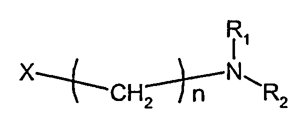 mit X = 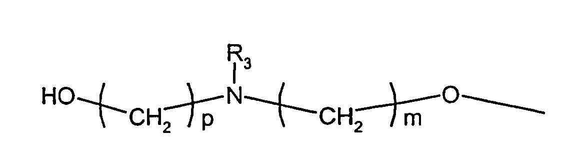 oder 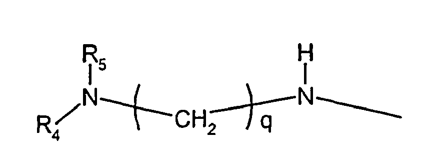 wobei
n, m, p, q ganze Zahlen von 2 bis 5 sind, die gleich oder verschieden sein können und
R₁, R₂, R₃, R₄, R₅ die Bedeutung C₁-C₅-Alkyl, bevorzugt Methyl haben.

Besonders bevorzugt als Komponente A) Bis(3-(N,N-dimethylamino)propyl)amin oder 2-Hydroxyethyl-trimethyl-diaminodiethylether verwendet.

Als Komponente B) werden bevorzugt Polyisocyanate der Diphenylmethanreihe mit einem Mehrkernanteil von mindestens 20% eingesetzt.

Die Komponente C) dient als Solvens für die durch Reaktion der Komponenten A) und B) entstehenden Additionsprodukte. Sie wird für gewöhnlich in solchen Mengen eingesetzt, dass die Konzentration der Additionsprodukte aus A) und B) in Komponente C) 20 bis 60 Gew.-% beträgt.

Beipiele für als Komponente C) einsetzbare Verbindungen sind Dipropylenglykol, Tripropylenglykol, Triisopropanolamin oder Additionsprodukte von Propylenoxid an Triethanolamin.

Die Aktivatoren d) werden gewöhnlich in einer Menge von 0,1 bis 10 Gew.-Teile, bevorzugt 1 bis 5 Gew.-Teile, bezogen auf 100 Teile der Polyolkomponenten b) und c), eingesetzt.

Als Komponente e) wird Wasser als chemisches Treibmittel eingesetzt in einer Menge von 0,5 bis 7,0 Gew.-%, bevorzugt 1,0 bis 4,0 Gew.-%, bezogen auf die Summe der Komponenten b) und c).

Zusätzlich können in der Reaktionsmischung flüssiges CO₂ oder organische Treibmittel f) als physikalische Treibmittel enthalten sein, z.B. Kohlenwasserstoffe wie Cyclopentan, iso-Pentan, n-Pentan, halogenierte Kohlenwasserstoffe wie Dichlormethan, Dichlormonofluormethan, Difluormethan, Trifluormethan, Difluorethan, 1,1,1,2-Tetrafluorethan, Tetrafluorethan (R 134 oder R 134a), 1,1,1,4,4,4-Hexafluorbutan (R 356), 1,1,1,3,3-Pentafluorpropan (R 245fa), 1,1,1,3,3-Pentafluorbutan (R 365mfc), Chlordifluorethane, 1,1-Dichlor-2,2,2-Trifluorethan, 2,2-Dichlor-2-fluorethan, Heptafluorpropan oder Schwefelhexafluorid. Auch Gemische dieser Treibmittel sind verwendbar. Weitere geeignete Treibmittel sind Carbonsäuren wie Ameisensäure, Essigsäure, Oxalsäure und chemische Treibmittel, die im Verlauf des Schäumprozesses Gase freisetzen wie z. B. Azoverbindungen. Bevorzugt werden diese Treibmittel in Kombination mit Wasser eingesetzt.

Als Stabilisatoren g) kommen vor allem Polyethersiloxane, speziell wasserlösliche Vertreter, zum Einsatz. Diese Verbindungen sind im allgemeinen so aufgebaut, dass ein Copolymerisat aus Ethylenoxid und Propylenoxid mit einem Polydimethylsiloxanrest verbunden ist. Derartige Stabilisatoren sind z.B. in US-A 2 834 748, US-A 2 917 480 und US-A 3 629 308 beschrieben. Von besonderem Interesse sind vielfach über Allophanatgruppen verzweigte Polysiloxan-Polyoxyalkylen-Copolymere gemäß DE-OS 25 58 523.

Bei der Herstellung der erfindungsgemäßen Polyurethanschaumstoffe können gegebenenfalls weitere Hilfs- und Zusatzstoffe h) mit zugesetzt werden. Beispiele sind Flammschutzmittel wie beispielsweise Trikresylphosphat, Tris-(2-chlorethyl)phosphat, Tris-(2-chlorpropyl)phosphat, Tris-(2,3-dibrompropyl)phosphat, Tetrakis-(2-chlorethyl)ethylendiphosphat, Dimethylmethanphosphonat, Diethanolaminomethylphosphonsäurediethylester sowie halogenhaltige, flammschützend wirkende Polyole. Mitverwendet werden können auch Paraffine oder Fettalkohole oder Dimethylpolysiloxane sowie Pigmente oder Farbstoffe, ferner Stabilisatoren gegen Alterungs- und Witterungseinflüsse, Weichmacher wie Dioctylphthalat und fungistatisch und bakteriostatisch wirkende Substanzen sowie Füllstoffe wie Bariumsulfat, Kieselgur, Ruß oder Schlämmkreide. Diese werden meist der Polyolkomponente in Mengen von 0 bis 10 Gewichtsteilen, bevorzugt 0 bis 5 Gewichtsteilen zugesetzt.

Weitere Beispiele von gegebenenfalls mitzuverwendenden oberflächenaktiven Zusatzstoffen und Schaumstabilisatoren sowie Zellreglem, Reaktionsverzögerern, Stabilisatoren, flammhemmenden Substanzen, Farbstoffen und Füllstoffen sowie fungistatisch und baktenostatisch wirksamen Substanzen sowie Einzelheiten über Verwendungs- und Wirkungsweise dieser Zusatzmittel sind in G. Oertel (Hrsg.):"Kunststoff-Handbuch", Band VII, Carl Hanser Verlag, 3. Auflage, München 1993, S.110-115 beschrieben.

### Beispiele

### Beschreibung der Ausgangsstoffe

| | |
|---|---|
| Polyol 1: | Polyetherpolyol mit einer OH-Zahl von 28 und mindestens 80% pri-mären OH-Gruppen, hergestellt durch Addition von Propylenoxid/Ethylenoxid (83/17) an Trimethylolpropan als Starter. |
| | |
| Polyol 2: | Polyetherpolyol mit einer OH-Zahl von 28 und mindestens 80% primären OH-Gruppen, hergestellt durch Addition von Propylenoxid/Ethylenoxid (83/17) an Trimethylolpropan als Starter und mit einem gepfropften Füllstoffgehalt von 20 Gew.% aus Styrol/Acrylnitril (40/60%). |
| | |
| Polyol 3: | Polyetherpolyol mit einer OH-Zahl von 500, hergestellt durch Addition von Propylenoxid an Triethanolamin als Starter. |
| | |
| Polyisocyanat 1: | Polyisocyanat der Diphenylmethanreihe, das durch Phosgenierung eines Anilin/Formaldehydkondensats erhalten wurde, mit einem Gehalt von 45 Gew.-% Diphenylmethandiisocyanat und 55 Gew.-% höheren Homologen, das einen Isocyanatgehalt von 31,5 Gew.-% und eine Funktionalität > 2,5 aufweist. |
| | |
| Polyisocyanat 2: | Polyisocyanat der Diphenylmethanreihe, das durch Phosgenierung eines Anilin/Formaldehydkondensats erhalten wurde, mit einem Gehalt von 35 Gew.-% Diphenylmethandiisocyanat und 65 Gew.-% höheren Homologen, das einen Isocyanatgehalt von 31,5 Gew.-% und eine Funktionalität > 2,7 aufweist. |
| | |
| Polyisocyanat 3: | Polyisocyanat der Diphenylmethanreihe, das durch Phosgenierung eines Anilin/Formaldehydkondensats erhalten wurde, mit einem Gehalt von 30 Gew.-% Diphenylmethandiisocyanat und 70 Gew.-% höheren Homologen, das einen Isocyanatgehalt von 31,5 Gew.-% und eine Funktionalität > 2,8 aufweist. |
| | |
| Polyisocyanat 4: | Diisocyanatodiphenylmethan, enthaltend 55% 2,4'-Isomer und 45% 4,4'-Isomer |
| | |
| Polyisocyanat 5: | Polyisocyanat der Diphenylmethanreihe, das durch Phosgenierung eines Anilin/Formaldehydkondensats erhalten wurde, mit einem Gehalt von 90 Gew.-% Diphenylmethandiisocyanat und 10 Gew.-% höheren Homologen, das einen Isocyanatgehalt von 31,5 Gew.-% und eine Funktionalität von 2,15 aufweist. |

### Herstellung der Aktivatoren

### Beispiel 1

93,5 g Bis(3-(N,N-dimethylamino)propyl)amin und 295 g Polyetherpolyol 3 wurden vorgelegt und 65,6 g Polyisocyanat 2 unter starkem Rühren bei Raumtemperatur in 5 Minuten zugetropft, wobei die Temperatur durch Kühlen auf 40°C gehalten wurde. Es wurde anschließend noch 30 Minuten lang bei 50°C nachgerührt. Es wurde ein Produkt mit einer Aminzahl von 240 mg KOH/g und einer Viskosität von 3390 mPa s (25°C) erhalten; das Produkt ist mehr als 6 Monate lagerstabil.

### Beispiel 2

93,5 g Bis(3-(N,N-dimethylamino)propyl)amin und 295 g Polyetherpolyol 3 wurden vorgelegt und analog Beispiel 1 mit 65,6 g Polyisocyanat 3 umgesetzt. Es wurde ein Produkt mit einer Aminzahl von 240 mg KOH/g und einer Viskosität von 3730 mPa s (25°C) erhalten; das Produkt ist mehr als 6 Monate lagerstabil.

### Beispiel 3

93,5 g Bis(3-(N,N-dimethylamino)propyl)amin und 295 g Dipropylenglykol wurden vorgelegt und analog Beispiel 1 mit 65,6 g Polyisocyanat 2 umgesetzt. Es wurde ein Produkt mit einer Aminzahl von 130 mg KOH/g und einer Viskosität von 842 mPa s (25°C) erhalten; das Produkt ist mehr als 6 Monate lagerstabil.

### Beispiel 4 (Vergleich)

93,5 g Bis(3-(N,N-dinethylamino)propyl)amin und 295 g Polyetherpolyol 3 wurden vorgelegt und analog Beispiel 1 mit 62,5 g Polyisocyanat 4 umgesetzt. Es wurde ein Produkt mit einer Aminzahl von 238 mg KOH/g erhalten, das sich langsam eintrübte; das Reaktionsprodukt kristallisierte innerhalb von 4 Wochen aus.

### Beispiel 5 (vergleich)

187 g Bis(3-(N,N-dimethylamino)propyl)amin und 542 g Polyetherpolyol 3 wurden vorgelegt und analog Beispiel 1 mit 125 g Polyisocyanat 5 umgesetzt. Es wurde ein Produkt mit einer Aminzahl von 235 mg KOH/g erhalten, das nach 2 Tagen eine Trübung zeigte; das Reaktionsprodukt kristallisierte innerhalb von 2 Wochen völlig aus.

### Beispiel 6

95 g N-2-Hydroxyethyl-N,N',N'-trimethyldiaminodiethylether und 279 g Polyether 3 wurden vorgelegt und analog Beispiel 1 mit 66 g Polyisocyanat 2 umgesetzt. Es wurde ein Produkt mit einer Aminzahl von 230 mg KOH/g und einer Viskosität von 2010 mPa s (25°C) erhalten; das Produkt ist mehr als 6 Monate lagerstabil.

### Verschäumungsbeispiele

### Beispiele 7-10

Mit den in der Tabelle angegebenen Formulierungen wurden Polyurethan-Freischäume hergestellt. Dazu wurden Polyol, Wasser und Aktivator vorgemischt, dann wurde das Isocyanat zugesetzt, die Reaktionsmischung 10 Sekunden lang bei 1200 Upm homogenisiert und dann in eine Plattenform gegossen, auf deren Boden zuvor eine 10 cm x 10 cm große handelsübliche PVC-Folie mit einer Dicke von ca. 1 mm fixiert worden war.

| **Beispiel** | **7** | **8** | **9*** | **10*** |
|---|---|---|---|---|
| Polyol 1 | 69,7 | 69,7 | 70,7 | 70,7 |
| Polyol 2 | 22,0 | 22,0 | 23,0 | 23,0 |
| Polyol 3 | 3,5 | 3,5 | 5,5 | 5,5 |
| Wasser | 2,8 | 2,8 | 2,8 | 2,8 |
| Akt. Beisp. 1 | 3,0 | - | - | - |
| Akt. Beisp. 2 | - | 3,0 | - | - |
| Dimethylaminopropylharnstoff | - | - | 0,6 | - |
| Dabco 33 LV | - | - | - | 0,6 |
| Polyisocyanat 1 | 50 | 50 | 50 | 50 |
| Startzeit [s] | 19 | 19 | 18 | 17 |
| Steigzeit [s] | 97 | 98 | 97 | 95 |
| Rohdichte [kg/m³] | 62 | 62 | 62 | 61 |

| | | | | |
|---|---|---|---|---|
| *nicht erfindungsgemäßes Vergleichsbeispiel | | | | |

### Alterungsverhalten der Schaumstoffe

Das Foggingverhalten der hergestellten Schaumstoffe wurde gemäß DIN 75201/B geprüft. Als weitere Kriterien wurden ein dynamisches Verfahren (DaimlerChrysler-Arbeitsvorschrift "PB VW T 709" zur Bestimmung von gasförmigen und kondensierbaren Emissionen aus Fahrzeuginnenausstattungsmaterialien mit Thermodesorption) sowie ein statisches Verfahren (Audi/VW-Prüfspezifikation "PV 3341" für nichtmetallische Werkstoffe der KFZ-Innenausstattung zur Bestimmung der Emission von organischen Verbindungen) zur Bestimmung temperaturabhängiger Emissionen herangezogen.

Beim dynamischen Verfahren zur Bestimmung der gasförmigen Emissionen (VOC-Wert) wird die Probe (10 bis 30 mg Einwaage) in ein leeres Glasrohr eingeschlossen und für 30 Minuten auf 90°C erhitzt. Die dabei abgegebenen flüchtigen Bestandteile der Probe werden bei -150°C ausgefroren und anschließend durch schlagartiges Erhitzen auf 280°C wieder freigesetzt, auf der Kapillarsäule eines Gaschromatographen aufgetrennt und mit einem massenselektiven Detektor detektiert.

Im Anschluss an die Ermittlung der gasförmigen Emissionen werden mit derselben Probe die kondensierbaren Emittenten (FOG-Wert) erfasst. Dazu wird die Probe im Gerät belassen und für 60 Minuten auf 120°C erhitzt. Die dabei abgegebenen flüssigen Bestandteile der Probe werden wiederum bei -150°C ausgefroren und anschließend durch schlagartiges Erhitzen auf 280°C wieder freigesetzt, auf der Kapillarsäule eines Gaschromatographen aufgetrennt und mit einem massenselektiven Detektor detektiert.

Beim statischen Verfahren zur Bestimmung temperaturabhängiger Emissionen wird in ein Head-Space-Analysengläschen eine Probenmenge von 1,0 g/10 ml Gläschenvolumen eingewogen und vor der Messung im gasdicht verschlossenen Analysengläschen 5 Stunden lang auf 120°C temperiert.Die Proben in den temperierten Probengläschen werden mit Hilfe eines Head-Space-Probengebers über die Kapillarsäule eines Gaschromatographen analysiert.

| **Beispiel** | **7** | **8** | **9*** | **10*** |
|---|---|---|---|---|
| Fogging [mg] nach DIN 75201/B | 0,07 | 0,08 | 0,37 | 0,08 |

| Emissionen [ppm]¹⁾ | | | | |
|---|---|---|---|---|
| FOG-Wert | 32 | 32 | 105 | 85 |
| VOC-Wert | 13 | 13 | 52 | 250 |
| Emissionen [ppm]²⁾ | 5 | 5 | 19,5 | 11,5 |

| | | | | |
|---|---|---|---|---|
| * nicht erfindungsgemäßes Vergleichsbeispiel ¹⁾Dynamisches Verfahren zur Bestimmung temperaturabhängiger Emissionen ²⁾ Statisches Verfahren zur Bestimmung temperaturabhängiger Emissionen | | | | |

Zur Bestimmung der Folienschädigung wurde gemäß DIN 53504 die Reißdehnung der hinterschäumten PVC-Folien bestimmt. Der Ausgangswert der verwendeten Folie betrug 290%; die Reißdehnung einer 500 Stunden lang bei 120°C gelagerten Folie betrug 280%. Eine gemäß Beispiel 1 hinterschäumte Folie wurde für 500 Stunden bei 120°C gelagert, anschließend wurde der Schaumstoff von der Folie abgeschält. Die Folie zeigte keine Farbveränderung. Die Reißdehnung der so erhaltenen Folie betrug 270%.

## Patentansprüche

1. Aktivator, enthaltend das Umsetzungsprodukt von
A) einem mindestens eine tertiäre Aminogruppe aufweisenden sekundären Amin oder primären Alkohol,
B) einem Polyisocyanat der Diphenylmethanreihe mit einer Funktionalität von 2,5 bis 4,0, und
C) einer zur Addition an Isocyanat befähigten OH-funktionellen Reaktivkomponente.

2. Verfahren zur Herstellung von Polyurethanen, bei dem ein Aktivator gemäß Anspruch 1 als Katalysator eingesetzt wird.

3. Verwendung von Aktivatoren gemäß Anspruch 1 zur Herstellung von emissionsarmen Polyurethanen.

4. Formteil, enthaltend unter Verwendung von Aktivatoren gemäß Anspruch 1 hergestelltes, gegebenenfalls mit mindestens einem weiteren Werkstoff in Oberflächenkontakt stehendes Polyurethan.

## Claims

1. Activator comprising the reaction product of
A) a secondary amine or primary alcohol containing at least one tertiary amino group,
B) a polyisocyanate of the diphenylmethane series with a functionality of from 2.5 to 4.0 and
c) an OH-functional reactive component which is capable of addition on to isocyanate.

2. Process for the preparation of polyurethanes, in which an activator according to claim 1 is employed as a catalyst.

3. Use of activators according to claim 1 for the preparation of low-emission polyurethanes.

4. Moulding comprising a polyurethane which has been prepared using activators according to claim 1 and is optionally in surface contact with at least one further material.

## Revendications

1. Activateur contenant le produit de réaction
A) d'une amine secondaire présentant au moins un groupe amino tertiaire ou d'un alcool primaire,
B) d'un polyisocyanate de la série du diphénylméthane avec une fonctionnalité de 2,5 à 4,0, et
C) d'un constituant réactif OH-fonctionnel capable d'une addition sur un isocyanate.

2. Procédé pour la préparation de polyuréthanes, dans lequel on utilise un activateur selon la revendication 1 comme catalyseur.

3. Utilisation d'activateurs selon la revendication 1 pour la préparation de polyuréthanes pauvres en émission.

4. Pièce moulée contenant du polyuréthane préparé en utilisant des activateurs selon la revendication 1, se trouvant éventuellement en contact de surface avec au moins un autre matériau.
